# EUROPÄISCHE PATENTSCHRIFT

(11) **EP 0 877 157 B1**
(45) Veröffentlichungstag und Bekanntmachung des Hinweises auf die Patenterteilung: **27.08.2003**
(21) Anmeldenummer: 98890128.6
(22) Anmeldetag: 06.05.1998
(51) Int. Cl.: F02D 21/08, F02D 41/38, F02D 43/00

(54) **Verfahren zur Steuerung eines Dieselmotors mit Abgasrückführung**
Control method for a diesel engine with exhaust gas recirculation
Méthode de commande d'un moteur diesel avec recirculation des gaz d'échappement

(30) Priorität: 06.05.1997 AT 77397
(43) Veröffentlichungstag der Anmeldung: 11.11.1998
(73) Patentinhaber: STEYR-DAIMLER-PUCH AKTIENGESELLSCHAFT, 1010 Wien (AT)
(72) Erfinder: Kordesch, Valentin, Dipl.-Ing.Dr., 9133 Miklauzhof (AT)
(74) Vertreter: Kovac, Werner, Dipl.-Ing.

(56) Entgegenhaltungen:
- DE-A- 4 214 880
- DE-A- 4 322 270
- US-A- 4 295 455

## Beschreibung

Die Erfindung handelt von einem Verfahren zur Steuerung eines Dieselmotors mit Abgasrückführung, bei dem eine erste Steuereinheit anhand eines ersten gespeicherten Kennfeldes und aus Betriebsgrößen eine einen bestimmten Massenfüllungsverhältnis ergebende Soll-Einspritzmenge ermittelt, und bei dem eine zweite Steuereinheit anhand eines zweiten gespeicherten Kennfeldes und aus Betriebsgrößen eine Soll-Abgasrückführrate ermittelt, welche beide sodann von entsprechenden Organen eingeregelt werden.

Die Abgasrückführung hat in letzter Zeit unter dem Druck schrittweise strenger werdender Emissionsgrenzwerte an Bedeutung gewonnen. Erschwerend ist, daß die Minimierung der Emission von NOX und von Partikeln einander teilweise entgegenwirkende Maßnahmen erfordert. Besonders kritisch sind in den nach 2000 in Kraft tretenden Grenzen nach EURO III die NOX-Emissionen, da NOX aus den Abgasen nur mit sehr großem Aufwand zu entfernen ist.

Aus der DE 42 14 880 C ist ein Verfahren zur Steuerung der Abgasrückführung von aufgeladenen Motoren bekannt, bei dem die Abgasrückführrate aus einer Tabelle und Betriebsgrößen wie Motordrehzahl und Gashebelstellung so ermittelt wird, daß schadstoffärmeres Abgas erzeugt und gleichzeitig die Neigung zur Rauchbildung minimiert wird. Das wird dadurch erreicht, daß die Steuerung des Abgasrückführrate in Abhängigkeit vom Ladedruck erfolgt, um die bei höherem Ladedruck höhere Rauchgrenze auszunutzen. Über die Steuerung der Einspritzmenge und die Motorauslegung ist nichts gesagt, sie entspricht daher dem allgemeinen Stand der Technik. Dasselbe gilt auch für die Abgasrückführrate.

Der neueste Stand der Technik kommt in dem Bericht über das 2. Stuttgarter Symposium über "Kraftfahrwesen und Verbrennungsmotoren" vom 18.bis 20.Feber 1997 (Expert Verlag 1997) zum Ausdruck. Dort ist auf Seite 104 angegeben, daß die Rückführraten je nach Betriebszustand des Motors bis zu maximal 30 Prozent betragen. In dem dort abgebildeten AGR-Kennfeld ist zu erkennen, daß die Rückführrate nur in einem kleinen Drehzahlbereich und bei Teillast 20 Prozent erreicht. Damit scheint die Grenze der durch Verfeinerung der bekannten Steuerverfahren möglichen NOX-Reduktion erreicht, genug für die Einhaltung der Grenzwerte nach EURO II, aber zu wenig für EURO III.

Es ist dem Verständnis der Erfindung förderlich, ein Massenfüllungsverhältnis als Quotient aus der angesaugten Gasmasse (Masse der Luft und des rückgeführten Abgases) und der während eines Hubes eingespritzten Brennstoffmasse zu definieren.

Es ist somit das Ziel der vorliegenden Erfindung, das Problem der NOX-Emissionen grundsätzlich anders anzupacken und eine Lösung vorzuschlagen, die sich bei Motortests überraschenderweise als zielführend erwiesen hat.

Erfindungsgemäß besteht diese Lösung darin, daß
a) die Abgasrückführrate im Wesentlichen über das gesamte zweite Kennfeld größer als Null ist, und
b) das Massenfüllungsverhältnis im Wesentlichen im gesamten Betriebsbereich erhöht ist.

Es wird also, im Gegensatz zur bisherigen Übung, im gesamten Betriebsbereich, insbesondere auch bei mittlerer bis großer Last und hoher Drehzahl, Abgas rückgeführt. Diese Maßnahme wurde bisher als nicht zielführend betrachtet. Die Reduzierung der NOX-Emissionen im gesamten Betriebsbereich wird aber erst durch das Zusammenwirken dieser Abgasrückführung mit einem erhöhten Massenfüllungsverhältnis erreicht.

Vorzugsweise liegt die Abgasrückführrate bei Schwachlast und kleineren Drehzahlen zwischen 35 und 50 % und beträgt bei Volllast noch etwa 10 %.

Die Erhöhung des Massenfüllungsverhältnisses kann auf verschiedene Weise erreicht werden: Bei Saugmotoren durch Reduzierung der Einspritzmenge; bei aufgeladenen Motoren durch Anhebung des Ladedruckes, die ja bei gleicher volumetrischer Füllung wegen des höheren Druckes eine größere Gasmasse bedeutet. Die Luftzahl (Lambda) bleibt dabei ungefähr gleich, wegen des Restsauerstoffes im rückgeführten Abgas kann sie sogar geringfügig größer sein.

Es wird nicht verschwiegen, daß durch die Erhöhung des Massenfüllungsverhältnisses die maximale Leistung eines Saugmotors von gegebenem Hubraum etwas sinkt. Das wird aber durch den günstigen Drehmomentverlauf von Dieselmotoren im unteren Drehzahlbereich und beim Vergleich mit dem erheblichen Mehraufwand für eine nachträgliche Entstickung des Abgases mehr als aufgewogen.

Bei einem aufgeladenen Motor hingegen ist die Steigerung des Ladedruckes leicht durch geeignete Auslegung des Abgasturboladers zu erreichen. Die Beanspruchung des Motors steigt dadurch nicht, da wegen der gegenüber dem Stand der Technik unveränderten Einspritzmenge der effektive Mitteldruck ja unverändert bleibt.

Im folgenden wird die Erfindung anhand von Abbildungen beschrieben und erläutert. Es stellen dar:
- Fig.1:: Schema eines nach dem erfindungsgemäßen Verfahren gesteuerten Saugmotors,
- Fig.2:: Schema eines nach dem erfindungsgemäßen Verfahren gesteuerten Motors mit Aufladung,
- Fig.3:: Kennfeld der Abgasrückführrate eines aufgeladenen Dieselmotors nach dem Stand der Technik in Abhängigkeit von Betriebsgrößen,
- Fig.4:: Kennfeld der Abgasrückführrate eines erfindungsgemäß gesteuerten aufgeladenen Dieselmotors in Abhängigkeit von Betriebsgrößen,
- Fig.5:: Tabelle mit Meßwerten eines Motors, betrieben nach dem Stand der Technik und gemäß der Erfindung.

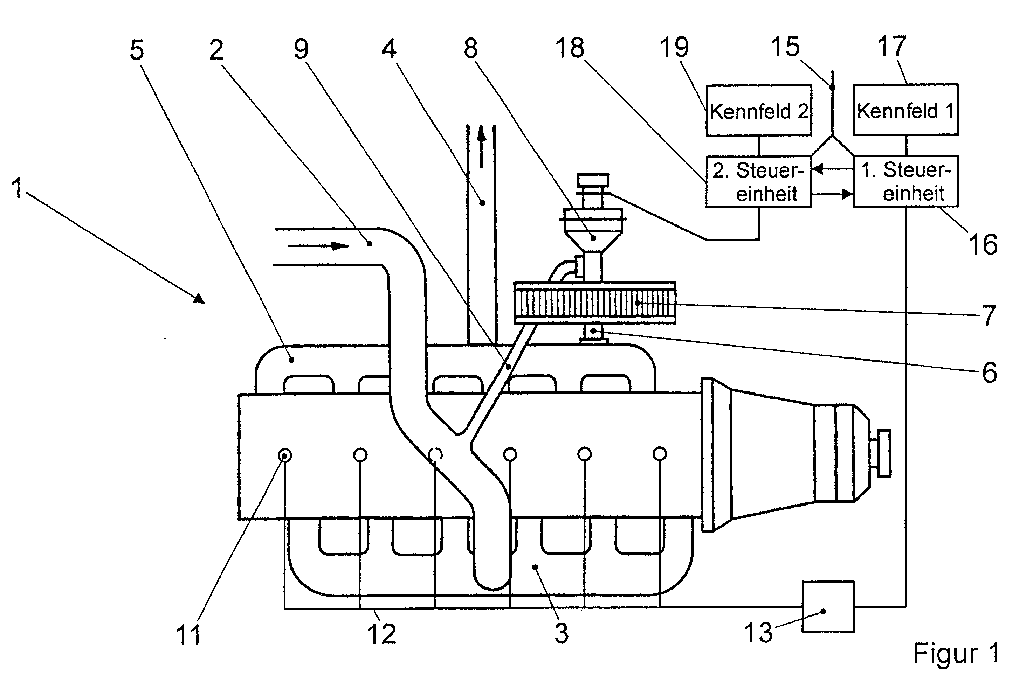

Der in Figur 1 dargestellte Dieselmotor 1 ist ein Saugmotor. Er verfügt über eine Ansaugleitung 2, die über einen Einlaßkrümmer 3 zu den Verbrennungsräumen führt und über eine Auspuffleitung 4, die mit einem Auslaßkrümmer 5 in Verbindung steht. In diesem Auslaßkrümmer 5 ist eine Abzweigleitung 6 für Auspuffgase vorgesehen, die gegebenenfalls über einen Abgaskühler 7 und über ein Rückführventil 8 mit einer Rückführleitung 9 in Verbindung steht, die in die Ansaugleitung 2 mündet.

Die Zufuhr des Brennstoffes erfolgt über Einspritzdüsen 11. Mit 13 ist ein Steuerorgan für die Einspritzmenge bezeichnet, das nur symbolisch dargestellt ist. Es könnte sich beispielsweise dabei um eine Einspritzpumpe mit Mengensteuerung handeln. Ebenso gut können die Einspritzdüsen 11 Pumpedüseneinheiten sein, an denen die Mengensteuerung direkt vorgenommen wird. Auch ein Druckspeichereinspritzsystem (common-rail) kann angewendet werden.

Über Leitungen 15 werden gemessene Betriebsparameter, zB Motordrehzahl, Gaspedalstellung, Motortemperatur etc., einer ersten Steuereinheit 16 und einer zweiten Steuereinheit 18 zugeführt. In der ersten Steuereinheit 16 wird aus den Betriebsgrößen und einem ersten Kennfeld 17 eine Soll-Einspritzmenge ermittelt und diese der Einspritzsteuerung 13 mitgeteilt. In der zweiten Steuereinheit 18 wird aus den Betriebsgrößen und einem zweiten Kennfeld 19 eine Soll-Abgasrückführrate ermittelt, die dann von dem Rückführventil 8 eingestellt wird. Die beiden Steuereinheiten 16,18 und Kennfelder 17,19 sind nur der Übersichtlichkeit halber getrennt dargestellt. Sie können entweder räumlich zu einer einzigen Steuereinheit zusammengefaßt oder, bei Verwendung einer Prozessorsteuerung, der Reihe nach abgearbeitet werden.

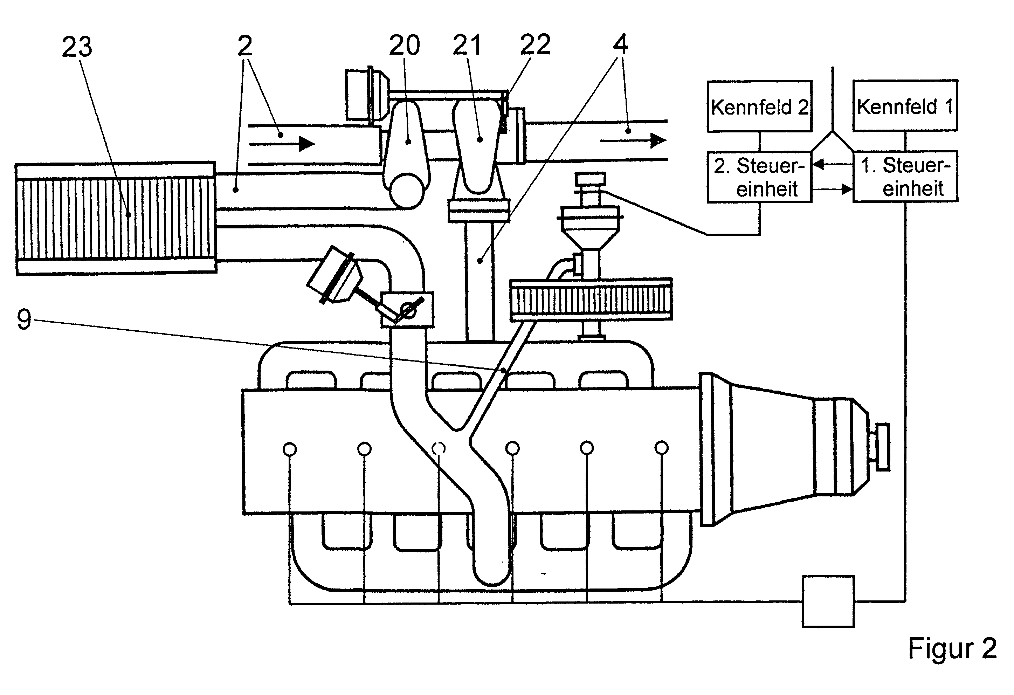

Figur 2 zeigt einen Dieselmotor, der sich von dem der Figur 1 durch die Aufladung unterscheidet. In der Ansaugleitung 2 ist ein Kompressor 20 untergebracht, der von einer in der Auspuffleitung 4 angeordneten Abgasturbine 21, die üblicherweise mit dem Kompressor koaxial ist, angetrieben. Gegebenenfalls ist ein Ablaßventil 22 und ein Ladeluftkühler 23 vorgesehen. Das Steuerschema unterscheidet sich von dem der Figur 1 nicht.

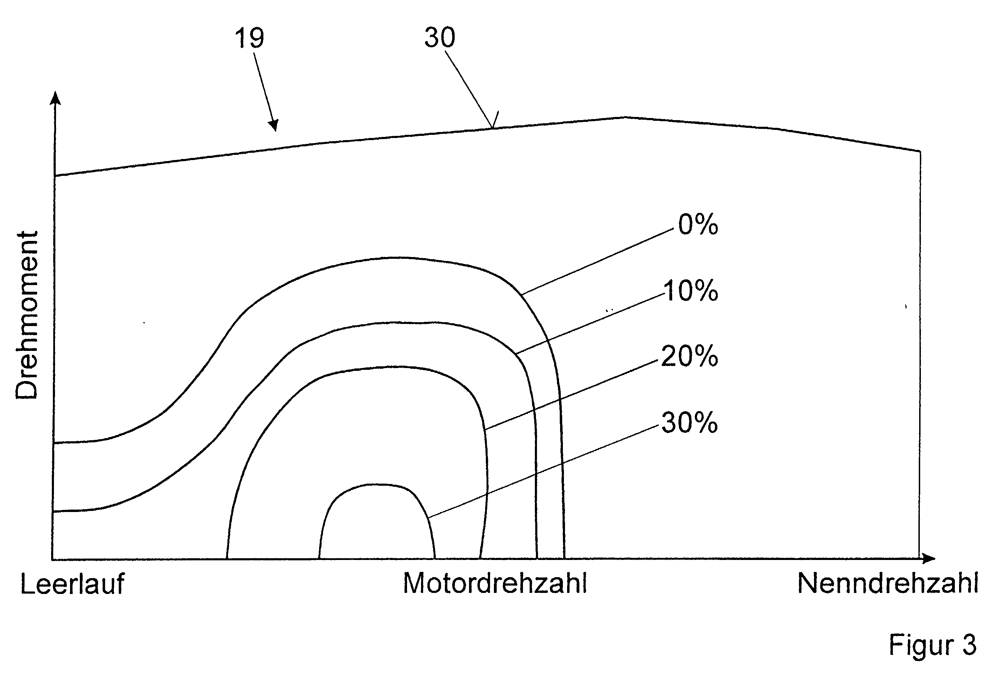

Die Figur 3 zeigt das zweite Kennfeld 19 für die Soll-Abgasrückführrate in Abhängigkeit von den Betriebsgrößen Motordrehzahl und Drehmoment eines aufgeladenen Dieselmotors nach dem Stand der Technik, das heisst mit den üblichen Abgasrückführraten. Es ist zu erkennen, daß die Rückführrate bei Schwachlast und mittler Drehzahl am größten ist und etwa 30 % betragt. Sie nimmt dann muschelartig ab und erreicht bei etwa 10 % den Leerlaufpunkt und nimmt dann bald den Wert 0 an, entsprechend völlig geschlossenem Rückführventil 8, entlang einer Muschelkurve, die etwa den Bereich mittlerer Drehzahl bis niederer Drehzahl bei Schwachlast umfasst. In dem gesamten Feld hoher Drehzahl bzw Leistung bleibt es geschlossen.

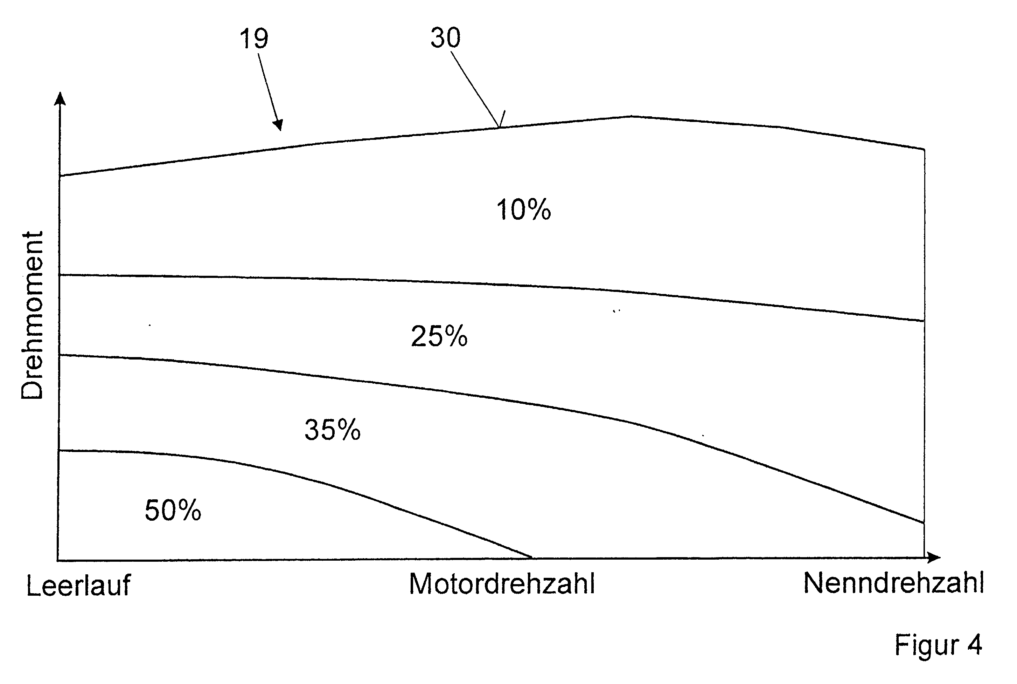

In Figur 4 hingegen sind die zur Realisierung der Erfindung gehörenden Abgasrückführraten eingezeichnet. Die Abgasrückführrate beträgt bei Leerlauf ungefähr 50 %. Sie fällt jedoch gegen die Vollastgrenze 30 hin nur ganz allmählich ab, sodaß praktisch in dem gesamten Betriebsbereich Abgas rückgeführt wird. Auch bei Betrieb auf dieser Vollastgrenzkurve ist noch Rückführung von Abgasen möglich, sie darf jedoch auf dieser Kurve selbst bereits 0 betragen.

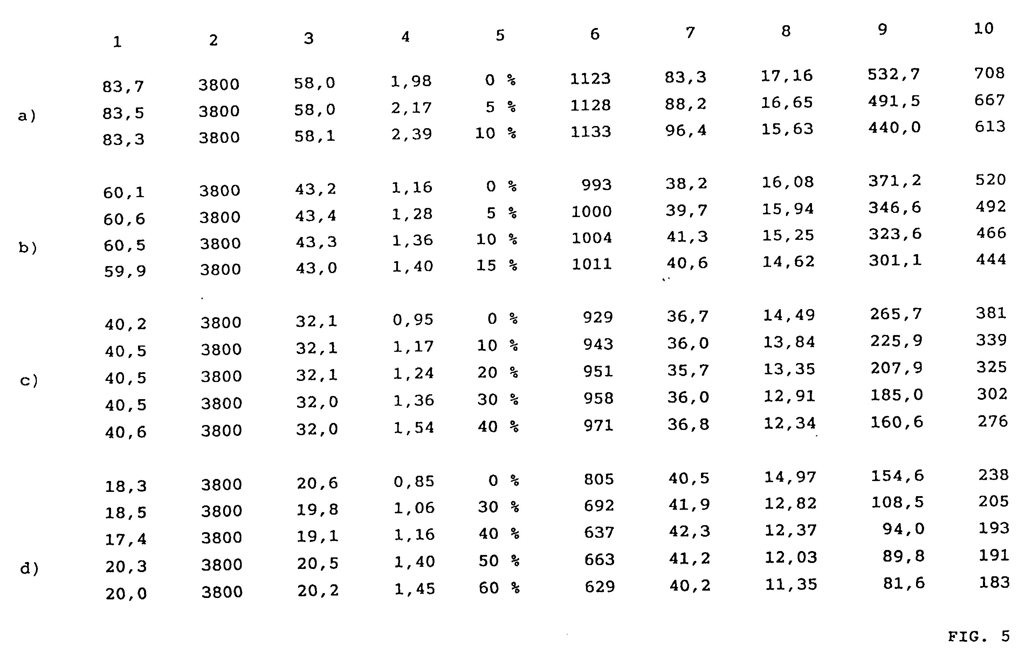

Die Figur 5 zeigt eine Meßwerttabelle, aus der die mit dem erfindungsgemäßen Regelverfahren erzielten Vorteile erkennbar sind. Die Messungen wurden an demselben Motor, betrieben als Saugmotor, durchgeführt, sind somit ohne Einschränkungen miteinander vergleichbar. In den Spalten erscheinen der Reihe nach folgende Zahlen:
Spalte 1: Motorleistung in kW
Spalte 2: Motordrehzahl in Umdrehungen/Minute
Spalte 3: Eingespritzte Kraftstoffmenge in cm3/Hub
Spalte 4: Rußemission in BOSCH-Einheiten
Spalte 5: Abgasrückführrate in Prozent
Spalte 6: Ansaugdruck in Millibar
Spalte 7: CO-Emissionen in Gramm/Stunde
Spalte 8: HC-Emissionen in Gramm/Stunde
Spalte 9: NOX-Emissionen in Gramm/Stunde
Spalte 10: NOX-Emissionen in PPM (Part per million).

Die ersten drei Zeilen, bezeichnet mit a), entsprechen einem Betriebszustand, bei dem der Motor mit einer vollen Leistung von ungefähr 83 kW betrieben wird und die Abgasrückführraten variiert werden. In der ersten Zeile beträgt die Abgasrückführrate 0 %, so, wie es dem Stand der Technik entspricht; in der zweiten und dritten Zeile ist dann die Abgasrückführrate auf 5 bzw. 10 % erhöht. Aus Spalte 8,9, und 10 ist zu sehen, daß die Emissionswerte für CH und NOX mit zunehmender Rückführrate besser werden, aus Spalten 4 und 7 jedoch, daß die Rauchwerte und CO-Emissionen, bereits bei einer Abgasrückführrate von 0 % sehr hoch, weiter ansteigen. Daraus leuchtet ein, daß bei einer Betriebsweise nach dem Stand der Technik Abgasrückführung bei Vollast nicht in Frage kommt.

Die unter b) zusammengefaßten Zeilen zeigen die Daten desselben Motors in Betrieb mit einer Leistung von etwa 60 KW. Vergleich ergibt, daß die Emissionswerte für HC und NOX mit steigender Rückführrate signifikant fallen, die CO-Emissionswerte kaum steigen und die Rauchemissionswerte insgesamt auf einem wesentlich tieferen Niveau liegen als bei 84 kW. Hier sind also die NOX-Emissionen signifikant niederer und die Rauchemissionen nur etwas höher. Wenn man vor allem die NOX-Emissionen klein halten will ist der Betrieb mit einer Rückführrate von 10 oder 15 % optimal. Wenn man nun die Kennfelder 1 und 2, und damit die Betriebsweise des Motors so festlegt, daß diese Betriebszustände bei Vollastbetrieb des Motors auftreten, ist das Ziel der Erfindung mehr als erreicht.

Ganz ähnlich sind die Emissionswerte bei einem aufgeladenen Motor. Ein Leistungsabfall tritt jedoch nicht auf, da das Massenfüllungsverhältnis durch Steigerung des Ladedruckes erhöht wird. Wegen der dabei unveränderten Einspritzrate, steigt der Mitteldruck (und damit die thermische und mechanische Belastung des Motors) dadurch nicht an.

Die nächsten Zeilen c) zeigen die Emissionsdaten bei Betrieb desselben Motors mit etwa 40 kW, was bezogen auf die Meßwerte b) hoher Teillast entspricht. Hier kann die Abgasrückführrate vorteilhaft mit etwa 30 % gewählt werden.

In den Zeilen d) ist zu sehen, daß die Emissionswerte ähnlich gut sind, wenn der Motor mit ungefähr 20 PS, entsprechend Schwachlast, und einer Rückführrate von etwa 50 % betrieben wird.

Die Meßwerte in den Zeilen a) bis d) wurden durchwegs bei der gleichen Drehzahl aufgenommen. In Wahrheit sind die Verhältnisse allerdings dadurch wesentlich komplizierter und unübersichtlicher, da der Einfluß der Drehzahl zu berücksichtigen ist.

## Patentansprüche

1. Verfahren zur Steuerung eines Dieselmotors mit Abgasrückführung, bei dem eine erste Steuereinheit (16) anhand eines ersten gespeicherten Kennfeldes (17) und aus Betriebsgrößen eine ein bestimmtes Massenfüllungsverhältnis ergebende Soll-Einspritzmenge ermittelt, und bei dem eine zweite Steuereinheit (18) anhand eines zweiten gespeicherten Kennfeldes (19) und aus Betriebsgrößen eine Soll-Abgasrückführrate ermittelt, welche beide sodann von entsprechenden Organen (8,13) eingeregelt werden, **dadurch gekennzeichnet, daß**
a) die Abgasrückführrate im Wesentlichen über das gesamte zweite Kennfeld größer als Null ist,
b) das Massenfüllungsverhältnis im Wesentlichen im gesamten Betriebsbereich erhöht ist.

2. Verfahren nach Anspruch 1, **dadurch gekennzeichnet, daß** die Abgasrückführrate bei Schwachlast und kleineren Drehzahlen zwischen 35 und 50 % liegt und bei Vollast noch etwa 10 % beträgt.

3. Verfahren nach Anspruch 1 für einen Saugmotor, **dadurch gekennzeichnet, daß** die Erhöhung des Massenfüllungsverhältnisses durch Reduzierung der Einspritzmenge erzielt wird.

4. Verfahren nach Anspruch 1 für einen Motor mit Aufladung mittels eines Abgasturboladers, **dadurch gekennzeichnet, daß** die Erhöhung des Massenfüllungsverhältnis durch Erhöhung des Ladedruckes erzielt wird.

## Claims

1. A method of controlling a diesel engine permitting the return of exhaust gas, wherein a first control unit (16), by means of a first stored performance diagram (17) and on the basis of operating parameters, determines a nominal injection quantity resulting in a certain mass filling ratio and wherein a second control unit (18), by means of a second stored performance diagram (19) and on the basis of operating parameters, determines a nominal exhaust gas return rate, which, for control purposes, are then both fed in by suitable elements (8, 13),
**characterised in**
a) that, substantially over the entire second performance diagram, the exhaust gas return rate is greater than zero,
b) that, substantially over the entire operating range, the mass filling ratio is increased.

2. A method according to claim 1,
**characterised in**
**that** at low loads and lower rotational speeds, the exhaust gas return rate ranges between 35% and 50% and, at full load, still amounts to approximately 10%.

3. A method according to claim 1 for a suction engine,
**characterised in**
the increase in the mass filling ratio is achieved by reducing the injection quantity.

4. A method according to claim 1 for an engine supercharged by means of an exhaust gas turbo charger,
**characterised in**
**that** the increase in the mass filling ratio is achieved by increasing the supercharging pressure.

## Revendications

1. Procédé de commande d'un moteur diesel avec recyclage des gaz d'échappement, dans lequel une première unité de commande (16) détermine, par référence à un premier champ de caractéristiques (17) et à partir de grandeurs de fonctionnement, une quantité d'injection théorique donnant un rapport déterminé de remplissage des masses, et dans lequel une deuxième unité de commande (18) détermine, par référence à un deuxième champ de caractéristiques (19) et à partir de grandeurs de fonctionnement, un pourcentage théorique de recyclage des gaz d'échappement, les deux unités de commande étant ensuite réglées par des organes correspondants (8, 13), **caractérisé en ce que** :
a) le pourcentage de recyclage des gaz d'échappement est supérieur à zéro sensiblement sur toute le deuxième champ de caractéristiques,
b) le rapport de remplissage des masses est majoré sensiblement dans toute la plage de fonctionnement.

2. Procédé selon la revendication 1, **caractérisé en ce que** le pourcentage de recyclage des gaz d'échappement est compris entre 35 et 50% pour une charge réduite et des nombres de tours plus petits, et est encore d'environ 10% à pleine charge.

3. Procédé selon la revendication 1 pour moteur atmosphérique, **caractérisé en ce que** l'augmentation du rapport de remplissage des masses est réalisée en réduisant la quantité d'injection.

4. Procédé selon la revendication 1 pour moteur à suralimentation par turbocompresseur à gaz d'échappement, **caractérisé en ce que** l'augmentation du rapport de remplissage des masses est réalisée en augmentant la pression d'admission.
